# EUROPEAN PATENT APPLICATION

(11) **EP 4 796 658 A1**
(43) Date of publication of application: **26.08.2026**
(21) Application number: 24877663.5
(22) Date of filing: 01.10.2024
(51) Int. Cl.: C22C 21/00, C22C 21/02

(54) **ALUMINIUM-BASED ALLOY AND ARTICLE MADE OF SAME**

(30) Priority: 11.10.2023 RU 2023126017
(71) Applicant: Obshchestvo S Ogranichennoj Otvetstvennost'Yu "Institut Legkikh Materialov I Tekhnologij", Moscow 119049 (RU)
(72) Inventor: MANN, Viktor Khrist'yanovich, g. Krasnoyarsk, 660111 (RU); RYABOV, Dmitrij Konstantinovich, g. Krasnoyarsk, 660111 (RU); VAKHROMOV, Roman Olegovich, g. Krasnoyarsk, 660111 (RU); GRADOBOEV, Aleksandr Yur'evich, g. Krasnoyarsk, 660111 (RU); ALIEV, Ruslan Tejmurovich, g. Krasnoyarsk, 660111 (RU); SHINKARENKO, Evgenij Vasil'evich, g. Krasnoyarsk, 660111 (RU); KRIVENKOVA, Evgenija Vladimirovna, g. Krasnoyarsk, 660111 (RU)
(74) Representative: Atalay, Baris
(86) International application number: PCT/RU2024/050235
(87) International publication number: WO 2025/080164

(57) **Abstract**

The invention relates to metals & mining, specifically to aluminium alloys for the production of thin aluminium foils suitable for use in the manufacture of lithium-ion batteries and batteries based thereon. The aluminium alloy contains, mass %: iron 0.40-0.60, silicon 0.10-0.20, copper 0.05-0.15, zirconium 0.05-0.10, scandium 0.01-0.05, titanium 0.005-0.02, boron 0.0001-0.005, aluminium not less than 99.0, inevitable impurities, including vanadium not more than 0.02, the remainder being aluminium and inevitable impurities. The alloy structure contains nanoscale precipitates with an L1₂-type crystal lattice of Al₃Sc and Al₃Zr phases, as well as complex Al₃(Sc,Zr) phases. In a second option, the alloy additionally contains one element selected from the group consisting of manganese in an amount of not more than 0.15 mass % and nickel in an amount of not more than 0.15 mass %. This ensures an increase in ultimate tensile strength to 265-305 MPa and an elongation at break to 2-3 %.

## Description

### Field of the invention

The invention relates to the field of non-ferrous metals & mining, and more particularly to aluminium alloys used for manufacturing thin aluminium foil for use as electrodes in lithium-ion batteries.

### Prior art

Aluminium foil is one of the main materials used in the manufacture of lithium-ion batteries, which comprise ultrathin layers of aluminium foil bearing a lithium-containing cathode material and copper foil bearing an anode layer.

Increasing the energy density of a battery may be achieved by increasing the number of layers and the surface area per unit volume; therefore, it is necessary to reduce the foil thickness. Over recent years, the thickness of aluminium foil has been reduced from 16 µm to 14 µm, and subsequently to 12 µm. At present, many battery manufacturers are transitioning to the use of aluminium foil having a thickness of 10 µm and even 8 µm.

As the aluminium foil for lithium-ion batteries continues to decrease in thickness, the requirements for ultimate tensile strength and surface quality increase accordingly. To prevent breakage during the application of cathode material layers, calendering, winding, drying and other process operations, in which the foil is subjected to tensile and compressive forces, the material must possess sufficient strength and ductility. For foil having a thickness of 10 µm or less, a tensile strength of at least 265 MPa with an elongation of not less than 2 % is required.

Aluminium foil for lithium-ion batteries is currently manufactured from technical aluminium grades of the 1xxx series, such as 1070, 1235, 1200 and 1100, with an aluminium content of at least 99.0 %. The tensile strength in the H18 temper is approximately 180-200 MPa.

WO2019124530 discloses an aluminium alloy for foil containing (mass %): Fe 1.0-1.8, Si 0.01-0.06, Cu 0.006-0.015, the remainder being aluminium and inevitable impurities. This composition makes it possible to produce foil for battery electrodes having a thickness of 6-30 µm and a tensile strength of up to 180 MPa. A drawback of this solution is insufficient strength characteristics for thin foil.

WO2014069119 discloses an alloy for manufacturing aluminium foil for lithium-ion batteries. The alloy contains (mass %): Fe 0.2-1.0, Si 0.1-0.6, the remainder being aluminium and inevitable impurities. A version of this composition with additional alloying with Cu 0.01-0.25 mass % is also known. A method for producing foil having a thickness of 12 µm from this alloy is also described. The tensile strength of foil of this alloy is 210 MPa, which is slightly higher than that of the above-mentioned analogue, but insufficient for thin foil.

JP5639398 discloses a hardened alloy for manufacturing contacts (3 phase slip rings). The alloy contains (mass %): Fe 0.2-1.3, Cu 0.01-0.5, Si up to 0.2, as well as inevitable impurities, the remainder being aluminium of at least 88.0 mass %. According to the patent description, it is possible to manufacture foil for battery contacts (3 phase slip rings) having a thickness of 5-20 µm, an ultimate tensile strength of 215-220 MPa, and an elongation of 1-3 %. Although the strength characteristics of the foil of this variant of the aluminium alloy are higher than those of the previously described analogues, they are still insufficient for thin foil used as battery electrodes. High concentrations of alloying elements, particularly copper, and, consequently, a low aluminium content make this alloy poorly suited for manufacturing thin battery foil, which is predominantly manufactured from 1xxx series alloys with an aluminium content of at least 99.0 mass %.

One of the 1xxx series alloys widely used for manufacturing battery aluminium foil is alloy 1100, which, in accordance with GOST 618-2014 'Aluminium foil for technical purposes', contains (mass %): total Fe+Si ≤ 0.95, Cu 0.05-0.20, Mn ≤ 0.05, Zn ≤ 0.10, other impurities each individually ≤ 0.05, the remainder being aluminium of at least 99.0 mass %. The use of this alloy makes it possible to manufacture thin foil having a thickness of less than 10 µm with an ultimate tensile strength of up to 245 MPa (GB/T 33143 'Aluminium and aluminium foils for lithium-ion batteries'). However, the manufacture of thin foil with higher mechanical properties requires revision of the composition of this alloy.

The closest analogue, selected as a prototype, is the alloy described in WO2019214243 '1100 alloy aluminum foil for lithium battery and manufacturing method therefor', which discloses aluminium foil based on the 1100 alloy for lithium batteries containing the following components in mass %:

| | |
|---|---|
| Fe | 0.4-0.5 |
| Si | 0.1-0.2 |
| Cu | 0.1-0.15 |
| Ti | 0.01-0.02 |
| Sc | 0.03-0.07 |
| Ce | 0.03-0.07 |
| Mn | ≤ 0.01 |
| Mg | ≤ 0.005 |
| Zn | ≤ 0.005 |
| Al | ≥ 99.2 |

On the condition that the total Fe+Si content is ≤ 0.65 and the Fe/Si ratio is in the range of 2.0-4.0.

Compared with the standard 1100 alloy, in the present invention the total content of Fe and Si is limited, such that the secondary iron-containing phases are mainly present in the form of the α (Al₃Fe₃Si) phase.

The addition of the rare-earth elements Sc and Ce leads to an increase in the mechanical properties of the foil due to the strengthening effect of the precipitated phases Al₁₁Ce₃ and Al₃Sc. At the same time, rare-earth elements can improve the distribution of Fe and Si and suppress the precipitation of hard and brittle phases β(Al₉Fe₂Si₂) and Fe₃Al. Thus, according to the known technical solution, it is possible to manufacture foil having a thickness of 0.008-0.015 mm, an ultimate tensile strength of 220-260 MPa, an elongation of 3.5-5 %, and an electrical conductivity of 32-35 MS/m.

Despite the ultimate tensile strength of 259 MPa reported in WO2019214243, this level of mechanical properties does not meet the requirements of lithium-ion battery manufacturers for foils having a thickness of 10 µm or less, namely increased mechanical properties, in particular an ultimate tensile strength of at least 265 MPa and an elongation at break of at least 2 %.

### Disclosure of the invention

The technical objective and result of the present invention is to produce aluminium foil from a 1xxx series alloy with an aluminium content of at least 99.0%, used in the production of lithium-ion batteries with a thickness of 12 to 8 µm or less, with enhanced mechanical properties, in particular, a tensile strength in the range of 265-305 MPa and a relative elongation at break of 2-3 %.

The problem is solved, and the technical result is achieved in that a new 1xxx series aluminium alloy is provided containing iron, silicon, copper, scandium, titanium and boron, and additionally containing zirconium, in the following component proportions, mass %:

| | |
|---|---|
| Iron (Fe) | 0.40-0.60 |
| Silicon (Si) | 0.10-0.20 |
| Copper (Cu) | 0.05-0.15 |
| zirconium (Zr) | 0.05-0.10 |
| scandium (Sc) | 0.01-0.05 |
| titanium (Ti) | 0.005-0.02 |
| boron (B) | 0.0001-0.005 |
| Aluminium (Al) | not less than 99.0 |

inevitable impurities, including vanadium (V), the remainder being aluminium, with the vanadium content not exceeding 0.02,
optionally, at least one element selected from the group:

| | |
|---|---|
| Manganese (Mn) | not more than 0.15 |
| Nickel (Ni) | not more than 0.15 |

wherein its structure contains nanodispersed precipitates having an L1₂ crystal lattice of the Al₃Sc and Al₃Zr phases, as well as complex phases Al₃(Sc,Zr).

The invention provides an aluminium alloy of a specific composition, which enables its use for manufacturing thin foil used in lithium-ion batteries, thereby achieving a number of non-obvious advantages over known analogues.

The invention also claims a product in the form of foil made of the above-described alloy, having an ultimate tensile strength of at least 265 MPa and an elongation at break of at least 2 %.

### Brief description of the drawings

FIG. 1 shows a photograph of a roll of the obtained foil having a thickness of 8 µm.
FIG. 2 shows the microstructure of the obtained foil having a thickness of 8 µm.
FIG. 3 shows a dark-field image of a portion of the foil, obtained in reflection by Al₃(Zr,Sc) particles.

### Detailed description of the invention

In the course of experiments, a component composition of the alloy was selected, and optimal concentrations and ratios of the components were determined for solving the stated problem and achieving the technical result.

It has been established that Fe and Si are not only inevitable impurities in the production of primary aluminium, but also the main strengthening elements in 1xxx series aluminium alloys (with an aluminium content of at least 99.0 mass %). Si dissolves in aluminium at concentrations of up to 1.65 mass % (at 577 °C), thereby reducing electrical conductivity. By contrast, Fe is essentially insoluble in aluminium and, at low concentrations, does not significantly reduce electrical conductivity. Unlike alloy 1100, in which the total iron and silicon content is limited to not more than 0.95 mass %, for manufacturing higher-strength foil from 1xxx series aluminium, taking into account the use of other strengthening alloying elements, it is necessary to limit the Fe content to 0.40-0.60 mass % and the Si content to 0.10-0.20 mass %.

Cu at a concentration of 0.05-0.15 mass % increases the strength of the alloy due to solid-solution strengthening. The use of higher copper concentrations leads to a deterioration in the corrosion resistance of the foil, thereby posing a risk of corrosion defect formation during washing the foil to remove lubricating and cooling fluids and during application of cathode material. In addition, increasing the concentration of copper in the solid solution results in a reduction in ductility in a heavily cold-worked state. For a 1xxx series alloy intended for manufacturing foil for lithium-ion batteries, it is necessary to limit the Cu content to 0.15 mass %.

It has also been established that Sc is one of the most effective alloying elements, small additions of which significantly improve the mechanical properties of aluminium. Sc forms a coherent nanoscale Al₃Sc phase in aluminium having an L1₂ crystal lattice. Despite the high efficiency of strengthening aluminium alloys by alloying with Sc, additions exceeding 0.05 mass % are limited by the very high cost of this element and master alloys based on it.

The highest strength is achieved by combined alloying of Sc and Zr, resulting in formation of nanoscale precipitates Al₃Sc, Al₃Zr and complex Al₃(Zr,Sc) phases. In this case, a two-stage heat treatment is required to achieve complete precipitation of nanoscale Sc/Zr-containing Al₃(Sc,Zr) particles, wherein Sc precipitates at temperatures above 250 °C and Zr precipitates at temperatures above 400 °C. The use of zirconium makes it possible to reduce the scandium content to the range of 0.01-0.05 mass % while maintaining strength properties; however, zirconium itself is a high-melting metal, and its use at concentrations above 0.10 mass % requires higher melt casting temperatures, which may be difficult to implement on semi-continuous casting equipment used in industry. Taking the above into account, it is advisable to alloy the alloy with zirconium in the range of 0.05-0.10 mass %.

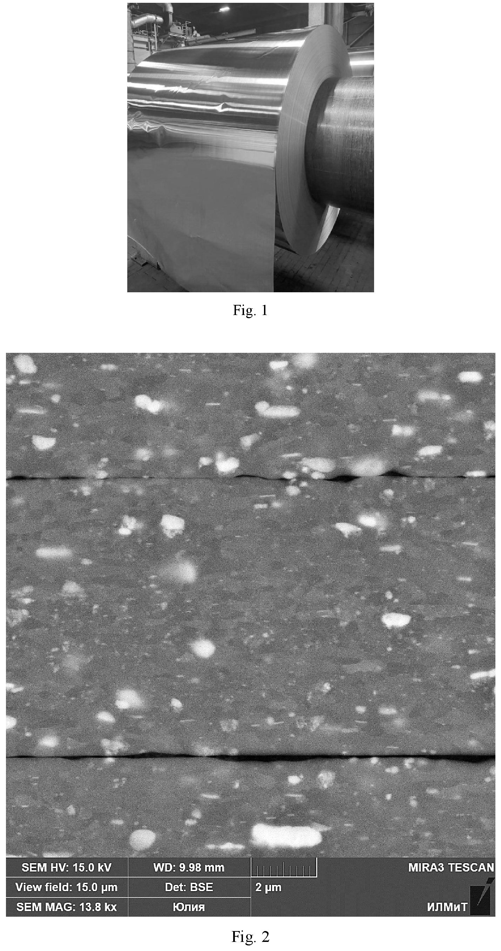

Additional optional alloying of aluminium alloys with Mn in the presence of Fe enables production of foil with higher strength and ductility due to precipitation of intermetallics and an increase in their volume fraction. In the presence of manganese, the intermetallic phase (Fe,Mn)Al₆ is formed in the cast structure in the form of `rods' with an average diameter of 0.1-1. µm. During subsequent rolling, this phase is broken down into fine dispersed particles (FIG. 2), which increase mechanical properties and limit grain growth during recovery and recrystallisation, resulting in an optimal combination of properties in the annealed and partially annealed states.

An additional optional addition of Ni leads to the formation, together with iron, of a ternary phase having a favourable morphology, which ensures retention of ductility without significant deterioration of corrosion resistance.

At the same time, alloying with Mn and, to a lesser extent, Ni reduces the electrical conductivity of aluminium; therefore, taking into account alloying with other elements and the requirement for an aluminium content of at least 99.0 mass % to maintain sufficient conductivity of cathode aluminium foil, it is necessary to limit the concentrations of Mn and Ni to not more than 0.15 mass % each.

Ti is widely used in the casting of aluminium alloys and, in amounts of 0.005-0.02 mass %, acts as a grain refiner, thereby ensuring a fine-grained structure during casting by forming compounds with aluminium that serve as crystallisation centres. However, like Cu, Ti significantly reduces electrical conductivity; therefore, its content must be limited to no more than 0.02 mass %.

In addition, to modify the cast structure and ensure formation of a homogeneous grain structure in the foil after deformation, B is introduced in the range of 0.0001-0.005 mass %, forming compounds with aluminium that act as crystallization centres during casting, thereby providing a fine-grained structure in casting blocks.

It is noted that one of the rare-earth metals used in alloying aluminium alloys is Ce. For Ce, the low cost is accompanied by limited strengthening effects; the low solubility of cerium in aluminium in the solid state (up to 0.05 mass %) makes age hardening less effective. Alloying aluminium with this element up to 2 mass % makes it possible to obtain alloys with improved high-temperature properties due to the precipitation of CeAl₄ strengthening particles. Ce additions at concentrations on the order of 0.05-0.07 mass % do not result in effective strengthening and reduce the electrical conductivity of aluminium. Given the use of more effective strengthening alloying elements such as Sc, Zr, Mn and Ni, the use of Ce does not present significant interest; furthermore, taking into account the requirement for a purity of 1xxx series aluminium of at least 99.0 mass %, its presence should be limited to the level of other inevitable impurities.

Another element whose presence must be limited is V, which is an inevitable impurity during aluminium electrolysis, entering the molten aluminium from alumina and the anode. Although V is used in some aluminium alloys as a grain refiner or an anti-recrystallisation agent, it is capable of significantly reducing the ductility of the resulting product. To obtain thin foil with an elongation at break of at least 2%, it is necessary to specifically limit the V content to not more than 0.02 mass %.

### Examples of embodiments of the invention

Samples of aluminium foil with thicknesses of 8-12 µm and different alloying element contents were produced by continuous casting and rolling. Under factory conditions, coils of cast casting blocks of model compositions with a thickness of 8 mm, a width of 1600 mm and a weight of 6-8 tonnes each were produced by semi-continuous casting on a two-roll water-cooled caster. For comparison, a similar coil was also produced with a composition based on the prototype.

### Embodiment 1

For the production of foil coils alloyed with Sc and Zr, molten aluminium of grade A8 was used as the feedstock. Fe80F, Cu80F, AlSc1, Zr80F and crystalline Si were used as the charge materials. An AlTi5B1 rod-type master alloy was used as a grain refiner. The composition of the melts was monitored by spectral analysis. The composition of the resulting coils is shown in Table 1.

**Table 1: Chemical composition of coils alloyed with Sc and Zr**

| Composition No. | Content of elements, mass % | | | | | | | | | |
|---|---|---|---|---|---|---|---|---|---|---|
| | Fe | Si | Cu | Zr | Sc | Ti | B | Ce | V | Al |
| 1 | 0.40 | 0.10 | 0.05 | 0.05 | 0.01 | 0.005 | 0.0001 | - | 0.005 | 99.34 |
| 2 | 0.50 | 0.20 | 0.15 | 0.10 | 0.01 | 0.015 | 0.001 | - | 0.014 | 99.05 |
| 3 | 0.50 | 0.13 | 0.15 | 0.08 | 0.03 | 0.015 | 0.001 | - | 0.007 | 99.05 |
| 4 | 0.60 | 0.10 | 0.10 | 0.05 | 0.05 | 0.020 | 0.005 | - | 0.013 | 99.00 |
| Prototype | 0.45 | 0.2 | 0.15 | - | 0.07 | 0.018 | 0.0001 | 0.03 | 0.005 | 99.20 |

The resulting coils of casting blocks were sequentially rolled in industrial cold rolling mills (CRM) using lubricating cooling liquid (LCL) to obtain foil coils with thicknesses of 12 and 8 µm (Fig. 1).

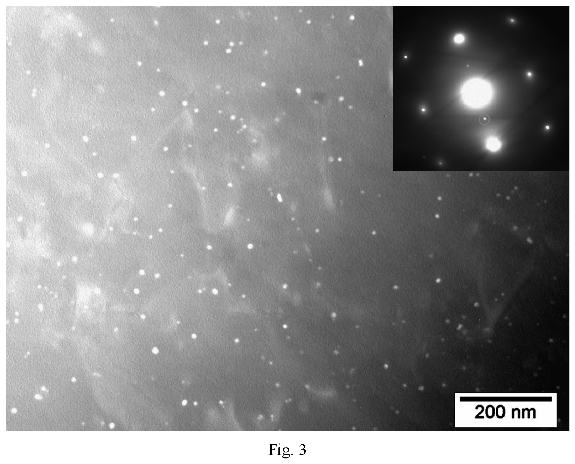

To precipitate strengthening nanoscale Al₃(Sc,Zr) particles with an L1₂-type crystal lattice, the coils were heat treated in the temperature range of 350-450 °C in the course of rolling (Fig. 3).

The results of mechanical property testing of samples with thicknesses of 12 and 8 µm, taken from foil coils of model compositions and the prototype, are presented in Table 2.

**Table 2. Mechanical properties of foil samples alloyed with Sc and Zr with thicknesses of 12 and 8 µm**

| Composition No. | Foil thickness, µm | Ultimate tensile strength (σ_{b}), MPa | | Elongation (δ), % | |
|---|---|---|---|---|---|
| | | Longitudinal direction | Cross-machine direction | Longitudinal direction | Cross-machine direction |
| 1 | 12 | 270 | 270 | 3.0 | 2.7 |
| | 8 | 265 | 270 | 2.8 | 2.6 |
| 2 | 12 | 275 | 275 | 2.3 | 2.2 |
| | 8 | 268 | 270 | 2.3 | 2.2 |
| 3 | 12 | 285 | 295 | 2.5 | 2.3 |
| | 8 | 280 | 285 | 2.4 | 2.2 |
| 4 | 12 | 270 | 275 | 2.7 | 2.9 |
| | 8 | 265 | 270 | 2.6 | 2.8 |
| Prototype | 12 | 255 | 260 | 3.1 | 2.8 |
| | 8 | 250 | 255 | 2.7 | 2.5 |

The obtained mechanical property data show that alloying with scandium and zirconium makes it possible to obtain thin foil with thicknesses of 8 and 12 µm having an ultimate tensile strength higher than that of the prototype and exceeding 265 MPa, depending on the concentration of alloying elements, and an elongation at break of more than 2 %.

### Embodiment 2

To obtain foil samples alloyed with Mn and Ni, both separately and jointly, four coils of casting blocks were produced. Mn80F and AlNi20% master alloys were used to introduce Mn and Ni into the melt. An AlTi5B1 rod, introduced during casting of the melt, was also used as a grain refiner. The degree of structure modification, as well as the Ti content in the alloy, was controlled by the feed rate of the rod. The composition of the resulting coils is shown in Table 3. Using the technology described in Example 1, with application of heat treatment to precipitate strengthening nanoscale particles with an L1₂ crystal lattice, thin foil coils with thicknesses of 8 and 12 µm were produced. The results of measurement of the mechanical properties of the resulting foil are shown in Table 4.

**Table 3: Chemical composition of coils alloyed with Sc and Zr and additionally alloyed with Mn and Ni**

| Composition No. | Elements, mass % | | | | | | | | | | |
|---|---|---|---|---|---|---|---|---|---|---|---|
| | Fe | Si | Cu | Zr | Sc | Ti | B | Mn | Ni | V | Al |
| 1 | 0.40 | 0.13 | 0.10 | 0.05 | 0.01 | 0.005 | 0.0001 | 0.15 | - | 0.013 | 99.10 |
| 2 | 0.40 | 0.13 | 0.10 | 0.05 | 0.01 | 0.02 | 0.005 | - | 0.15 | 0.009 | 99.10 |
| 3 | 0.40 | 0.13 | 0.05 | 0.05 | 0.01 | 0.01 | 0.001 | 0.15 | 0.15 | 0.020 | 99.02 |
| 4 | 0.40 | 0.15 | 0.10 | 0.05 | 0.03 | 0.01 | 0.001 | 0.10 | 0.10 | 0.012 | 99.03 |

**Table 4. Mechanical properties of foil samples alloyed with Sc and Zr and additionally alloyed with Mn and Ni with thicknesses of 12 and 8 µm**

| Composition No. | Foil thickness, µm | Ultimate tensile strength (σ_{b}), MPa | | Elongation (δ), % | |
|---|---|---|---|---|---|
| | | Longitudinal direction | Cross-machine direction | Longitudinal direction | Cross-machine direction |
| 1 | 12 | 275 | 280 | 2.3 | 2.2 |
| | 8 | 270 | 275 | 2.2 | 2.2 |
| 2 | 12 | 280 | 285 | 2.5 | 2.4 |
| | 8 | 275 | 280 | 2.4 | 2.2 |
| 3 | 12 | 300 | 305 | 2.1 | 2.2 |
| | 8 | 295 | 295 | 2.1 | 2.0 |
| 4 | 12 | 275 | 285 | 2.3 | 2.2 |
| | 8 | 270 | 275 | 2.2 | 2.2 |

The data obtained indicate that additional alloying with Mn and Ni makes it possible to obtain thin foil with thicknesses of 8 and 12 µm having an increased strength level, with an ultimate tensile strength in the range of 270-300 MPa, depending on the concentration of alloying elements, and an elongation at break of at least 2 %, which also exceeds the strength properties of the prototype.

### Embodiment 3

In the production of aluminium foil, molten aluminium of grade A8 supplied from electrolysis cells was used in all examples; the V content in the primary aluminium may vary, depending on the production frequency of aluminium in the electrolysis cell, in the range of 0.001-0.03 mass %. To assess the effect of V impurity on the properties of thin foil, two additional coils of casting blocks alloyed with Sc and Zr, as well as Ni and Mn, were produced using molten aluminium with an increased V content (Table 5). The mechanical properties of foil samples taken from coils of these compositions, obtained using a technology similar to that described in Example 1, are presented in Table 6.

**Table 5: Chemical composition of coils with high V content**

| Composition No. | Elements, mass % | | | | | | | | | | |
|---|---|---|---|---|---|---|---|---|---|---|---|
| | Fe | Si | Cu | Zr | Sc | Ti | B | Mn | Ni | V | Al |
| 1 | 0.50 | 0.10 | 0.10 | 0.08 | 0.03 | 0.01 | 0.001 | - | - | 0.022 | 99.12 |
| 2 | 0.40 | 0.10 | 0.05 | 0.05 | 0.03 | 0.005 | 0.0001 | 0.12 | 0.15 | 0.025 | 99.05 |

**Table 6. Mechanical properties of foil samples with high V content with thicknesses of 12 and 8 µm**

| Composition No. | Foil thickness, µm | Ultimate tensile strength (σ_{b}), MPa | | Elongation (δ), % | |
|---|---|---|---|---|---|
| | | Longitudinal direction | Cross-machine direction | Longitudinal direction | Cross-machine direction |
| 1 | 12 | 270 | 275 | 1.7 | 1.5 |
| | 8 | 265 | 270 | 1.6 | 1.3 |
| 2 | 12 | 300 | 305 | 1.6 | 1.6 |
| | 8 | 295 | 300 | 1.5 | 1.6 |

The resulting thin foil, as in Examples 1 and 2, is characterised by enhanced strength properties exceeding those of the prototype; however, the elongation at break decreases to below 2 %. Such a low level of elongation in thin aluminium foil carries a risk of frequent ruptures during application of the cathode material to lithium-ion batteries, which is a significant disadvantage.

The examples given demonstrate that the combined alloying of first series aluminium with scandium and zirconium, as well as additional alloying with manganese and nickel, makes it possible to obtain thin foil with an enhanced level of strength properties while maintaining ductility, provided that the proposed component ratios are observed, including limitations on vanadium content. Thus, the ultimate tensile strength of foil made from the proposed alloy is in the range of 265-300 MPa, and the elongation at break is at least 2 %. The achieved level of mechanical properties of the foil of the proposed compositions exceeds that of the prototype, for which the maximum ultimate tensile strength, according to the description, is only 260 MPa.

## Claims

1. An aluminium alloy for the manufacture of thin aluminium foils used in lithium-ion batteries, containing iron, silicon, copper, scandium, titanium, boron, aluminium and inevitable impurities, **characterised in that** it additionally contains zirconium, with the following content of components, mass %:
| | |
|---|---|
| iron | 0.40-0.60 |
| silicon | 0.10-0.20 |
| copper | 0.05-0.15 |
| zirconium | 0.05-0.10 |
| scandium | 0.01-0.05 |
| titanium | 0.005-0.02 |
| boron | 0.0001-0.005 |
| aluminium | not less than 99.0 |
inevitable impurities, including vanadium, the remainder being aluminium and inevitable impurities, wherein the vanadium content is not more than 0.02 mass %, and wherein the alloy structure contains nanoscale precipitates of Al₃Sc and Al₃Zr phases, as well as complex Al₃(Sc,Zr) phases having an L1₂-type crystal lattice.

2. An aluminium alloy for the manufacture of thin aluminium foils used in lithium-ion batteries, containing iron, silicon, copper, scandium, titanium, boron, aluminium and inevitable impurities, **characterised in that** it additionally contains zirconium and at least one element selected from the group consisting of manganese and nickel, with the following content of components, mass %:
| | |
|---|---|
| iron | 0.40-0.60 |
| silicon | 0.10-0.20 |
| copper | 0.05-0.15 |
| zirconium | 0.05-0.10 |
| scandium | 0.01-0.05 |
| titanium | 0.005-0.02 |
| boron | 0.0001-0.005 |
| manganese | not more than 0.15 |
| nickel | not more than 0.15 |
| aluminium | not less than 99.0 |
inevitable impurities, including vanadium, the remainder being aluminium and inevitable impurities, wherein the vanadium content is not more than 0.02 mass %, and wherein the alloy structure contains nanoscale precipitates of Al₃Sc and Al₃Zr phases, as well as complex Al₃(Sc,Zr) phases having an L1₂-type crystal lattice.

3. A product made from the aluminium alloy according to claim 1 or claim 2, in the form of foil, having an ultimate tensile strength of at least 265 MPa and an elongation at break of at least 2 %.

4. The product according to claim 3, wherein the thickness of the foil is less than 12 µm.
